# EUROPÄISCHE PATENTSCHRIFT

(11) **EP 3 559 522 B1**
(45) Veröffentlichungstag und Bekanntmachung des Hinweises auf die Patenterteilung: **07.04.2021**
(21) Anmeldenummer: 17822626.2
(22) Anmeldetag: 14.12.2017
(51) Int. Cl.: F16K 37/00, F16K 7/12, G06K 19/04, G06K 19/077

(54) **VENTIL UND VERFAHREN ZUM HERSTELLEN EINES VENTILS**
VALVE AND METHOD FOR PRODUCTION OF A VALVE
SOUPAPE ET PROCÉDÉ DE FABRICATION D'UNE SOUPAPE

(30) Priorität: 21.12.2016 DE 102016125114
(43) Veröffentlichungstag der Anmeldung: 30.10.2019
(73) Patentinhaber: GEMÜ Gebr. Müller Apparatebau GmbH & Co. Kommanditgesellschaft, 74653 Ingelfingen (DE)
(72) Erfinder: VOLPP, Thomas, 74219 Moeckmuehl (DE); FICK, Matthias, 74653 Kuenzelsau (DE); ZIEGLER, Philipp, 74838 Limbach (DE)
(74) Vertreter: DREISS Patentanwälte PartG mbB
(86) Internationale Anmeldenummer: PCT/EP2017/082862
(87) Internationale Veröffentlichungsnummer: WO 2018/114609

(56) Entgegenhaltungen:
- WO-A1-99/10673
- WO-A1-2016/192970
- FR-A1- 2 970 271
- US-A1- 2007 102 529
- US-A1- 2011 253 793
- US-A1- 2016 128 798

## Beschreibung

Die Erfindung betrifft ein Ventil nach dem Oberbegriff des Anspruchs 1 und ein Verfahren zum Herstellen eines Ventils nach dem Oberbegriff eines nebengeordneten Anspruchs.

Membranventile sind allgemein bekannt, um ein Prozessfluid mittels einer Membrane, welche mit einem Ventilsitz zusammenwirkt, zu stellen. Membranventile sind oft rauen Umgebungsbedingungen ausgesetzt. Beispielsweise ist es in bestimmten Bereichen wie der Lebensmittelindustrie notwendig, dass eine regelmäßige Abreinigung der Oberflächen des Membranventils erfolgt.

Des Weiteren sind Transponder, insbesondere RFID-Transponder bekannt, die kontaktlos mittels eines Lesegeräts ausgelesen werden können. Diese können beispielsweise als Aufkleber ausgebildet sein. Diese RFID-Transponder können eine individuelle Kennung aufweisen, die kontaktlos auslesbar ist. FR 2 970 271 - A1 offenbart ein Ventil nach dem Oberbegriff des Anspruchs 1.

Mithin ist es Aufgabe der Erfindung, ein Ventil bzw. ein Verfahren zum Herstellen des Ventils zu schaffen, welches auf günstige Art und Weise eine dauerhafte Identifizierung des Ventils bzw. einer Komponente des Ventils ermöglicht.

Die der Erfindung zugrunde liegende Aufgabe wird durch ein Ventil nach dem Anspruch 1 sowie durch ein Verfahren zum Herstellen des Ventils nach einem nebengeordneten Anspruch gelöst.

Es wird ein Ventil vorgeschlagen, bei dem ein Transponder in einem Transponderrahmen angeordnet ist. Eine äußere Öffnung des Transponderrahmens ist mit einer Vergussmasse verschlossen. Der Transponderrahmen ist mit einer äußeren Oberfläche einer Komponente des Ventils verbunden.

Vorteilhaft ergibt sich dadurch, dass ein Transponder steriltauglich und abreinigbar an einer Komponente angeordnet ist. Darüber hinaus ergeben sich Vorteile für den Verwender des Ventils, da über den gesamten Lebenszyklus des Ventils eine eindeutige Zuordnung Komponente sichergestellt ist. So kann beispielsweise festgestellt werden, welche Komponenten gemeinsam ausgeliefert wurden. Eine Nachverfolgung der Komponenten des Ventils wird somit ermöglicht.

In einer vorteilhaften Ausführungsform ist die Komponente ein Antriebsgehäuse und/oder ein Ventilkörper und/oder ein mit dem Antriebsgehäuse oder dem Ventilkörper verbindbares Typenschild.

In einer vorteilhaften Ausführungsform weist der Transponderrahmen in Richtung der Komponente eine ebene Kontaktfläche zu der Verbindung mit der ebenen Oberfläche der Komponente auf. Durch die ebene Ausbildung sowohl der Kontaktfläche als auch der Oberfläche der Komponente kann der Transponderrahmen für eine Vielzahl unterschiedlich ausgestalteter Ventile und Komponenten eingesetzt werden.

In einer vorteilhaften Ausführungsform verjüngt sich der Transponderrahmen in Richtung der äußeren Öffnung. Hierdurch verbessert sich die Abreinigbarkeit des gesamten Ventils. Gleichzeitig steht eine genügend große Fläche zur Verbindung mit der Oberfläche der Komponente zur Verfügung. Der weitere Aspekt betrifft das Verfahren zum Herstellen eines Ventils. Das Verfahren umfasst die Merkmale des Anspruchs 5.

In einer vorteilhaften Ausführungsform wird der Transponder über eine der äußeren Öffnung gegenüberliegende Einbringöffnung in den Transponderrahmen eingebracht. Hierdurch kann die äußere Öffnung zum Verschließen mit der Vergussmasse dienen und die Festlegung des Transponders wird von dem Verschließen der äußeren Öffnung entkoppelt. In einer vorteilhaften Ausführungsform wird die Verbindung des Transponderrahmens mit der Komponente des Ventils durch einen Laserschweißprozess hergestellt. Durch sichere Art und Weise wird so eine fluiddichte und materialschlüssige Verbindung zwischen dem Transponderrahmen und der Oberfläche der Komponente ermöglicht.

Weitere vorteilhafte Merkmale und Ausführungsformen sind der nachfolgenden Beschreibung der Zeichnung entnehmbar. Auch bei unterschiedlichen Ausführungsformen werden teilweise die gleichen Bezugszeichen verwendet, ohne dass hierauf nochmals explizit hingewiesen wird. In der Zeichnung zeigen:
Figur 1 einen schematischen Schnitt durch ein Ventil;
Figur 2 eine schematische perspektivischer Ansicht einer Transpondereinheit;
Figuren 3-6 unterschiedliche Schnittansichten durch einen Modulrahmen bzw. die Transpondereinheit; und
Figur 7 ein schematisches Ablaufdiagramm.

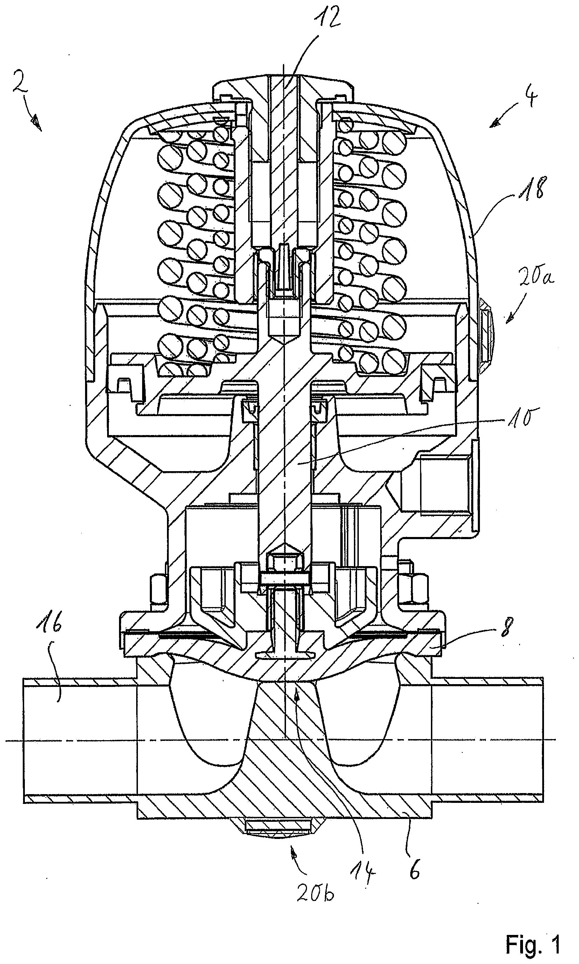

Figur 1 zeigt einen schematischen Schnitt durch ein beispielhaft dargestelltes Ventil 2, welches als Membranventil ausgebildet ist. Zwischen einem Antrieb 4 und einem Ventilkörper 6 ist eine Membran 8 angeordnet. Die Membran 8 wird mittels einer Ventilspindel 10 entlang einer Zustellachse 12 bewegt und schließt und öffnet in Zusammenwirken mit einem Ventilsitz 14 einen Fluidkanal 16 des Ventilkörpers 6. An einem Antriebsgehäuse 18 ist eine Transpondereinheit 20a angeordnet. An dem Ventilkörper 6 ist eine Transpondereinheit 20b angeordnet.

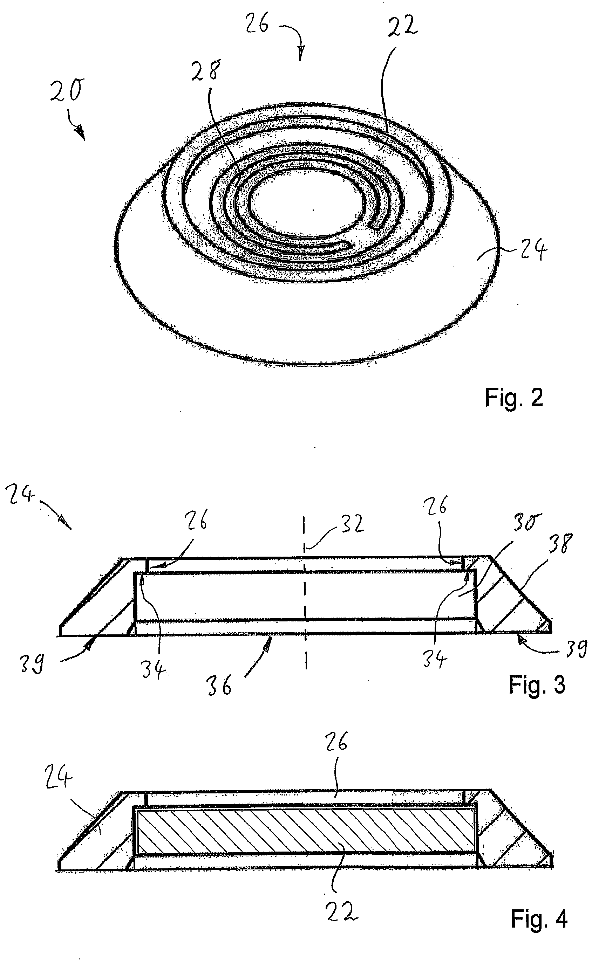

Figur 2 zeigt eine schematische perspektivischer Ansicht der Transpondereinheit 20. Die Transpondereinheit 20 umfasst einen Transponder 22 und einen den Transponder 22 abschnittsweise umgebenden Transponderrahmen 24. Der Transponderrahmen 24 ist aus einer Metalllegierung gefertigt. Der Transponderrahmen 24 umfasst eine äußere Öffnung 26, welche in einem verbauten Zustand mit einer Vergussmasse verschlossen ist. Die Vergussmasse ist in Figur 2 nicht gezeigt. Vielmehr ist in Figur 2 zu sehen, dass eine Koppelstruktur 28 des Transponders 22 in Richtung der äußeren Öffnung 26 orientiert angeordnet ist. Über die Koppelstruktur 26 findet die drahtlose Kommunikation statt.

Der Transponder 22 ist beispielsweise ein RFID-Transponder und erfüllt zumindest eine der Normen ISO 15693, ISO 14443, ISO 18000-6c. Des Weiteren ist der Transponder 22 scheibenförmig und in Umfangsrichtung rund aufgebaut.

Figur 3 zeigt den Transponderrahmen 24 in einer schematischen Schnittansicht. Der Transponderrahmen 24 ist im Wesentlichen rotationssymmetrisch um eine Rotationsachse 32 aufgebaut und weist einen Aufnahmeraum 30 zur Aufnahme des Transponders 22 auf. Die von einer Oberfläche einer Komponente nach außen gewandte äußere Öffnung 26 weist einen geringeren Durchmesser auf als der Aufnahmeraum 30. In Richtung der äußeren Öffnung 26 ist der Aufnahmeraum 30 durch einen kreisringförmigen Anschlagbereich 34 begrenzt. Der Anschlagbereich 34 begrenzt eine Bewegung des Transponders 22 in Richtung der Öffnung 26. Der äußeren Öffnung 26 abgewandt umfasst der Transponderrahmen 24 eine Einbringöffnung 36 zum Einbringen des Transponders 22. Ein Durchmesser des Aufnahmeraums 30 quer zur Rotationsachse 32 ist derart auf den Außendurchmesser des Transponders 22 abgestimmt, sodass der Transponder 22 durch eine Presspassung in dem Transponderrahmen 24 gehalten wird. Zusätzlich wird mittels des Anschlagbereichs 34 eine verlierersichere Anordnung des Transponders 22 in den Transponderrahmen 24 geschaffen. Eine Außenfläche 38 des Transponderrahmens 24 ist kegelstumpfförmig ausgebildet, wobei sich der Transponderrahmen 24 zu einer besseren Abreinigbarkeit in Richtung der äußeren Öffnung 26 verjüngt. Des Weiteren umfasst der Transponderrahmen 24 eine Kontaktfläche 39, welche im Wesentlichen kreisringförmig ausgebildet ist. Die Kontaktfläche 39 dient zum Anliegen und zum materialschlüssigen Verbinden mit der Oberfläche der Komponente des Ventils 2. In einer Ausführungsform kann die Kontaktfläche 39 in einer Ebene mit einer Oberfläche des Transponders 22 angeordnet sein, so dass der Transponder 22 ebenfalls an der Oberfläche der Komponente anliegt.

Figur 4 zeigt in einer schematischen Schnittansicht den in dem Transponderrahmen 24 angeordneten Transponder 22.

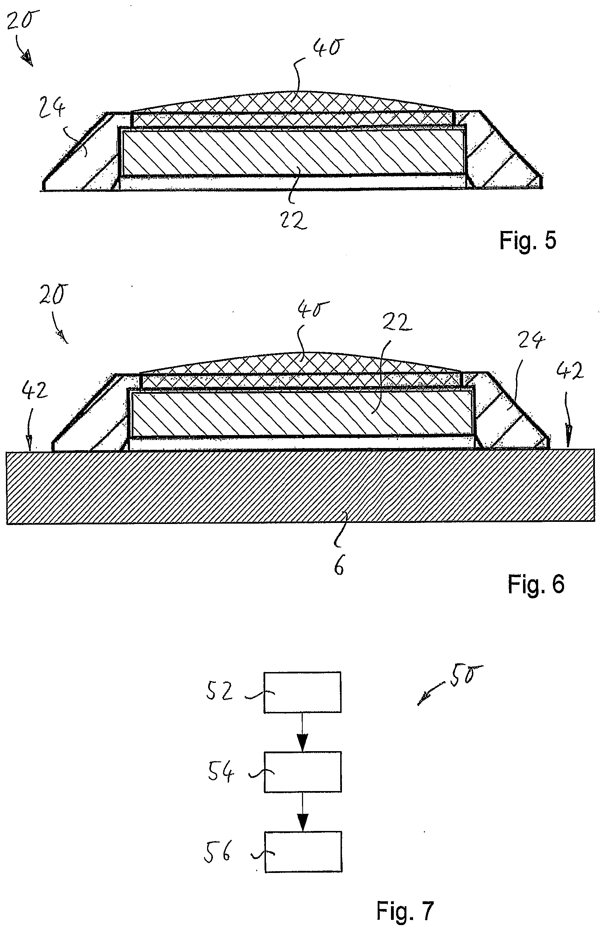

Figur 5 zeigt in einer schematischen Schnittansicht die Transpondereinheit 20. Im Unterschied zu Figur 4 ist in die äußere Öffnung 26 die Vergussmasse 40 eingebracht. Die Vergussmasse 40 umfasst beispielsweise Epoxidharz, welches zunächst in die Öffnung 26 eindosiert wird. Die eindosierte Vergussmasse 40 wird anschließend während einer Aushärtungsdauer von mindestens 10 Minuten, insbesondere mindestens 15 Minuten in einem Ofen bei einer Auswertungstemperatur oberhalb von 100 °C, insbesondere oberhalb von 130 °C, ausgehärtet. In einer weiteren Ausführungsform wird die Transpondereinheit 20 bei 150° eine Stunde Ofen ausgehärtet. Damit ist die äußere Öffnung 26 fluiddicht mit der Vergussmasse 40 verschlossen. Gleichzeitig ist die Vergussmasse 40 nicht elektrisch leitfähig und nicht magnetisierbar, wodurch sich der Transponder 22 durch die Vergussmasse 40 hindurch drahtlos ansprechen lässt.

Figur 6 zeigt in einer schematischen Schnittansicht die Transpondereinheit 20, welche auf der Oberfläche 42 angeordnet und mit dieser materialschlüssig verbunden ist. Bevorzugt wird durch einen Laserschweiß-Prozess der Transponderrahmen 24 materialschlüssig mit der ebenen Oberfläche 42 der Komponente des Ventils 2 verbunden. Bei der Komponente kann es sich beispielsweise um den in Figur 1 gezeigten Ventilkörper 6, das Antriebsgehäuse 18 oder aber ein an diesen Komponenten anordenbares Typenschild handeln. Die Komponente, an die die Transpondereinheit 20 angeordnet wird, ist aus einer Metalllegierung gefertigt.

Figur 7 zeigt ein schematisches Ablaufdiagramm 50. In einem ersten Schritt 52 wird der Transponder 22 in dem Transponderrahmen 24 angeordnet. Der Transponder 22 und der Transponderrahmen 24 werden zunächst von Verschmutzungen befreit und anschließend wird der Transponder 22 in den Transponderrahmen 24 mittels einer Einpressvorrichtung eingepresst.

In einem zweiten Schritt 54 wird die äußere Öffnung 26 des Transponderrahmens 24 mit der Vergussmasse 40 verschlossen. Eine Dosiereinrichtung bringt hierzu eine Menge der noch flüssigen Vergussmasse 40 in die äußere Öffnung 26 ein. Die Menge der flüssigen Vergussmasse 40 wird so bemessen, dass eine konvexe Oberfläche entsteht, welche bündig mit dem Rand der äußeren Öffnung 26 abschließt. Zusätzlich ist es möglich, Heißluft auf die eingebrachte Vergussmasse 40 zu führen, um Luftblasen zu vermeiden. Der Schritt 54 umfasst des Weiteren das Aushärten der Vergussmasse 40 im Ofen. Der Schritt 54 wird mit einer optischen Prüfung auf Fehlstellen in der Vergussmasse 40 abgeschlossen.

Anschließend wird in einem dritten Schritt 56 der Transponderrahmen 24 mit einer Komponente des Ventils 2 verbunden. Ein Laserschweißprozess wird mittels einer Laserschweißvorrichtung dazu verwendet, den Transponderrahmen 24 auf der Oberfläche 42 materialschlüssig und fluiddicht anzuordnen.

## Patentansprüche

1. Ein Ventil (2) umfassend einen Transponder (22) und einen Transponderrahmen (24), in welchem der Transponder (22) angeordnet ist, wobei der Transponderrahmen (24) aus einer Metalllegierung gefertigt ist, wobei eine äußere Öffnung (26) des Transponderrahmens (24) mit einer Vergussmasse (40) verschlossen ist, wobei die Vergussmasse (40) nicht elektrisch leitfähig und nicht magnetisierbar ist, wodurch sich der Transponder (22) durch die Vergussmasse (40) hindurch drahtlos ansprechen lässt, wobei der Transponderrahmen (24) mit einer äußeren Oberfläche (42) einer Komponente des Ventils (2) verbunden ist, wobei ein Aufnahmeraum (30) des Transponderrahmens (24) in Richtung der äußeren Öffnung (26) durch einen kreisringförmigen Anschlagbereich (26), welcher eine Bewegung des Transponders (22) in Richtung der äußeren Öffnung (26) begrenzt, begrenzt ist, wobei die von der Oberfläche (42) der Komponente nach außen gewandte äußere Öffnung (26) einen geringeren Durchmesser aufweist als der Aufnahmeraum (30), wobei der Transponderrahmen (24) rotationssymmetrisch um eine Rotationsachse (32) aufgebaut ist, **dadurch gekennzeichnet, dass** der Durchmesser des Aufnahmeraums (30) des Transponderrahmens (24) quer zu der Rotationsachse (32) derart auf einen Außendurchmesser des Transponders (22) abgestimmt ist, sodass der Transponder (22) durch eine Presspassung in dem Transponderrahmen (24) gehalten wird.

2. Das Ventil (2) nach Anspruch 1, wobei die Komponente ein Antriebsgehäuse (18) und/oder ein Ventilkörper (6) und/oder ein mit dem Antriebsgehäuse (18) oder dem Ventilkörper (6) verbindbares Typenschild ist.

3. Das Ventil (2) nach Anspruch 1 oder 2, wobei der Transponderrahmen (24) in Richtung der Komponente eine ebene Kontaktfläche (39) zu der Verbindung mit der ebenen Oberfläche (42) der Komponente aufweist.

4. Das Ventil (2) nach einem der vorstehenden Ansprüche, wobei der Transponderrahmen (24) sich in Richtung der äußeren Öffnung (26) verjüngt.

5. Ein Verfahren zum Herstellen eines Ventils (2), wobei das Ventil (2) einen Transponder (22) und einen Transponderrahmen (24), in welchem der Transponder (22) angeordnet wird, umfasst, wobei der Transponderrahmen (24) aus einer Metalllegierung gefertigt wird, wobei eine äußere Öffnung (26) des Transponderrahmens (24) mit einer Vergussmasse (40) verschlossen wird, wobei die Vergussmasse (40) nicht elektrisch leitfähig und nicht magnetisierbar ist, wodurch sich der Transponder (22) durch die Vergussmasse (40) hindurch drahtlos ansprechen lässt, wobei der Transponderrahmen (24) mit einer äußeren Oberfläche (42) einer Komponente des Ventils (2) verbunden wird, wobei ein Aufnahmeraum (30) des Transponderrahmens (24) in Richtung der äußeren Öffnung (26) durch einen kreisringförmigen Anschlagbereich (24), welcher eine Bewegung des Transponders (22) in Richtung der äußeren Öffnung (26) begrenzt, begrenzt ist, wobei die von der Oberfläche (42) der Komponente nach außen gewandte äußere Öffnung (26) einen geringeren Durchmesser aufweist als der Aufnahmeraum (30), wobei der Transponderrahmen (24) rotationssymmetrisch um eine Rotationsachse (32) aufgebaut ist, **gekennzeichnet durch** ein Einpressen des Transponders (22) in den Transponderrahmen (24) mittels einer Einpressvorrichtung, wobei der Durchmesser des Aufnahmeraums (30) des Transponderrahmens (24) quer zu der Rotationsachse (32) derart auf einen Außendurchmesser des Transponders (22) abgestimmt ist, sodass der Transponder (22) durch eine Presspassung in dem Transponderrahmen (24) gehalten wird.

6. Das Verfahren nach Anspruch 5, wobei der Transponder (22) über eine der äußeren Öffnung (26) gegenüberliegende Einbringöffnung (36) in den Transponderrahmen (24) eingebracht wird.

7. Das Verfahren nach Anspruch 5 oder 6, wobei die Verbindung des Transponderrahmens (24) mit der Komponente des Ventils durch einen Laserschweißprozess hergestellt wird.

## Claims

1. A valve (2) comprising a transponder (22) and a transponder frame (24) in which the transponder (22) is arranged, wherein the transponder frame (24) is made of a metal alloy, wherein an outer opening (26) of the transponder frame (24) is closed with a sealing compound (40), wherein the sealing compound (40) is not electrically conductive and not magnetizable, whereby the transponder (22) can be addressed wirelessly through the sealing compound (40), wherein the transponder frame (24) is connected to an outer surface (42) of a component of the valve (2), wherein a receiving space (30) of the transponder frame (24) in the direction of the outer opening (26) is delimited by an annular stop area (26), which limits a movement of the transponder (22) in the direction of the outer opening (26), the outer opening (26) facing outwards from the surface (42) of the component having a smaller diameter than the receiving space (30), the transponder frame (24) being constructed rotationally symmetrically about an axis of rotation (32) **characterized in that** the diameter of the receiving space (30) of the transponder frame (24) transverse to the axis of rotation (32) is adapted to an outer diameter of the transponder (22) in such a way that the transponder (22) is held in the transponder frame (24) by a press fit.

2. The valve (2) according to claim 1, wherein the component is a drive housing (18) and/or a valve body (6) and/or a nameplate connectable to the drive housing (18) or the valve body (6).

3. The valve (2) according to claim 1 or 2, wherein the transponder frame (24) has a planar contact surface (39) towards the component for connection to the planar surface (42) of the component.

4. The valve (2) according to any one of the preceding claims, wherein the transponder frame (24) tapers towards the outer opening (26).

5. A method of manufacturing a valve (2), wherein the valve (2) comprises a transponder (22) and a transponder frame (24) in which the transponder (22) is arranged, wherein the transponder frame (24) is made of a metal alloy, wherein an outer opening (26) of the transponder frame (24) is closed with a sealing compound (40), wherein the sealing compound (40) is non-electrically conductive and non-magnetizable, whereby the transponder (22) can be addressed wirelessly through the sealing compound (40), wherein the transponder frame (24) is attached to an outer surface (42) of a component of the valve (2), wherein a receiving space (30) of the transponder frame (24) is formed in the direction of the outer opening (26) by an annular stop area (24), which limits a movement of the transponder (22) in the direction of the outer opening (26), the outer opening (26) facing outwards from the surface (42) of the component having a smaller diameter than the receiving space (30), the transponder frame (24) being constructed rotationally symmetrically about an axis of rotation (32) **characterized by** pressing the transponder (22) into the transponder frame (24) by means of a press-fit device, the diameter of the receiving space (30) of the transponder frame (24) being adjusted transversely to the axis of rotation (32) to an outer diameter of the transponder (22) such that the transponder (22) is held in the transponder frame (24) by a press fit.

6. The method according to claim 5, wherein the transponder (22) is inserted into the transponder frame (24) via an insertion opening (36) opposite the outer opening (26).

7. The method according to claim 5 or 6, wherein the connection of the transponder frame (24) to the component of the valve is made by a laser welding process.

## Revendications

1. Soupape (2) comprenant un transpondeur (22) et un châssis de transpondeur (24) au sein duquel le transpondeur (22) est agencé, dans laquelle le châssis de transpondeur (24) est réalisé à partir d'un alliage métallique, dans laquelle une ouverture extérieure (26) du châssis de transpondeur (24) est fermée par un matériau d'enrobage (40), dans laquelle le matériau d'enrobage (40) n'est pas électriquement conducteur et ne peut être magnétisé, le transpondeur (22) pouvant ainsi être sollicité sans fil à travers le matériau d'enrobage (40), dans laquelle le châssis de transpondeur (24) est relié à une surface extérieure (42) d'un élément de la soupape (2), dans laquelle un espace de réception (30) du châssis de transpondeur (24) est délimité en direction de l'ouverture extérieure (26) par une région de butée annulaire (26) qui limite un mouvement du transpondeur (22) en direction de l'ouverture extérieure (26), dans laquelle l'ouverture extérieure (26) tournée vers l'extérieur à partir de la surface (42) de l'élément présente un diamètre inférieur à l'espace de réception (30), dans laquelle le châssis de transpondeur (24) est construit selon une symétrie de rotation autour d'un axe de rotation (32), **caractérisée en ce que** le diamètre de l'espace de réception (30) du châssis de transpondeur (24) transversalement par rapport à l'axe de rotation (32) est adapté à un diamètre extérieur du transpondeur (22), de telle manière que le transpondeur (22) est retenu dans le châssis de transpondeur (24) grâce à un ajustement serré.

2. Soupape (2) selon la revendication 1, dans laquelle l'élément est un boîtier d'entraînement (18) et/ou un corps de soupape (6) et/ou une plaque signalétique pouvant être reliée au boîtier d'entraînement (18) ou au corps de soupape (6).

3. Soupape (2) selon la revendication 1 ou 2, dans laquelle le châssis de transpondeur (24) présente en direction de l'élément une surface de contact plane (39) permettant la liaison avec la surface plane (42) de l'élément.

4. Soupape (2) selon l'une quelconque des revendications précédentes, dans laquelle le châssis de transpondeur (24) se rétrécit en direction de l'ouverture extérieure (26).

5. Procédé de production d'une soupape (2), dans lequel la soupape (2) comprend un transpondeur (22) et un châssis de transpondeur (24) au sein duquel le transpondeur (22) est agencé, dans lequel le châssis de transpondeur (24) est réalisé à partir d'un alliage métallique, dans lequel une ouverture extérieure (26) du châssis de transpondeur (24) est fermée par un matériau d'enrobage (40), dans lequel le matériau d'enrobage (40) n'est pas électriquement conducteur et ne peut être magnétisé, le transpondeur (22) pouvant ainsi être sollicité sans fil à travers le matériau d'enrobage (40), dans lequel le châssis de transpondeur (24) est relié à une surface extérieure (42) d'un élément de la soupape (2), dans lequel un espace de réception (30) du châssis de transpondeur (24) est délimité en direction de l'ouverture extérieure (26) par une région de butée annulaire (24) qui limite un mouvement du transpondeur (22) en direction de l'ouverture extérieure (26), dans lequel l'ouverture extérieure (26) tournée vers l'extérieur à partir de la surface (42) de l'élément présente un diamètre inférieur à l'espace de réception (30), dans lequel le châssis de transpondeur (24) est construit selon une symétrie de rotation autour d'un axe de rotation (32), **caractérisé par** l'étape consistant à enfoncer le transpondeur (22) dans le châssis de transpondeur (24) au moyen d'un dispositif d'enfoncement, dans lequel le diamètre de l'espace de réception (30) du châssis de transpondeur (24) transversalement par rapport à l'axe de rotation (32) est adapté à un diamètre extérieur du transpondeur (22) de telle manière que le transpondeur (22) est retenu dans le châssis de transpondeur (24) grâce à un ajustement serré.

6. Procédé selon la revendication 5, dans lequel le transpondeur (22) est introduit dans le châssis de transpondeur (24) par l'intermédiaire d'une ouverture d'introduction (36) opposée à l'ouverture extérieure (26).

7. Procédé selon la revendication 5 ou 6, dans lequel la liaison du châssis de transpondeur (24) à l'élément de la soupape est réalisée grâce à un procédé de soudage laser.
